Europäisches Patentamt

European Patent Office

Office européen des brevets

(11) Veröffentlichungsnummer: **0 303 786**
**A2**

(12) **EUROPÄISCHE PATENTANMELDUNG**

(21) Anmeldenummer: **88109487.4**

(22) Anmeldetag: **14.06.88**

(51) Int. Cl.⁴: **G02C 5/22**

(30) Priorität: **20.08.87 DE 3727861 U**

(43) Veröffentlichungstag der Anmeldung:
**22.02.89 Patentblatt 89/08**

(84) Benannte Vertragsstaaten:
**AT BE CH DE ES FR GB GR IT LI LU NL SE**

(71) Anmelder: **EYEMETRICS-SYSTEMS AG**
**Steinbockstrasse 4**
**CH-7000 Chur(CH)**

(72) Erfinder: **Czech, Günther**
**Heinrich-Hertz-Strasse 4/1**
**D-7024 Filderstadt 4(DE)**
Erfinder: **Baum, Joachim**
**Freibadweg 28**
**D-7062 Rudersberg(DE)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif Winter-Roth**
**Bavariaring 4**
**D-8000 München 2(DE)**

(54) **Gelenk zum Verbinden eines Bügelschaftes mit einem Gelenkstück einer Brille sowie Verfahren zur Herstellung eines solchen Gelenks.**

㊗ Bei einem Gelenk zum Verbinden eines Bügelschaftes mit einem Gelenkstück einer Brille befindet sich lediglich an einem dieser Elemente (Gelenkstück oder Bügelschaft) zumindest ein Gelenkauge. Der durch dieses Auge verlaufende Gelenkzapfen ist mit dem anderen Element (Bügelschaft oder Gelenkstück) einstückig ausgebildet. Zu diesem Zweck ist entweder der Gelenkbolzen aus Kunststoff bestehend in die Öffnung des Gelenkauges spritzgegossen oder das Gelenkauge aus Kunststoff bestehend um den Gelenkbolzen herum spritzgegossen. Dabei wird vorzugsweise in der Weise vorgegangen, daß zunächst eines der beiden Elemente mit dem zugehörigen Gelenkauge oder Gelenkbolzen gefertigt wird und dieses zunächst gefertigte Element einen Teil der Oberfläche des Hohlraums des Spritzgießwerkzeugs für das andere Element bildet, so daß das andere Element unmittelbar an das zunächst gefertigte Element angegossen wird. Die hohe Belastbarkeit dieses Gelenks beugt Verschleißbrüchen vor, wodurch einerseits die Le-bensdauer erhöht ist und undererseits das Gelenk kleine Abmessungen haben kann.

Fig. 3

Fig. 4

## Gelenk zum Verbinden eines Bügelschaftes mit einem Gelenkstück einer Brille sowie Verfahren zur Herstellung eines solchen Gelenks

Die Erfindung bezieht sich auf ein Gelenk zum Verbinden eines Bügelschaftes mit einem Gelenkstück einer Brille gemäß dem Oberbegriff von Patentanspruch 1 sowie ein Verfahren zur Herstellung eines solchen Gelenks gemäß dem Oberbegriff von Patentanspruch 12.

Ein Gelenk mit den Merkmalen des Oberbegriffs von Patentanspruch 1 ist bekannt (DE-OS 34 29 090). Bei dem bekannten Gelenk sind beide Elemente, d.h. sowohl das Gelenk stück als auch der Bügelschaft, mit Gelenkaugen versehen. Der als separates Teil gefertigte Gelenkbolzen verläuft durch die Gelenkaugen an den beiden Elementen und ist durch eine Rastverbindung aus einem umlaufenden Wulst am Gelenkbolzen sowie einer umlaufenden Nut in einem der Gelenkaugen in seiner Lage gesichert. Bei dem bekannten Gelenk bestehen das Gelenkstück, der Bügelschaft, die Gelenkaugen und der Gelenkbolzen aus Kunststoff, wobei das Gelenkstück mit seinen Gelenkaugen einerseits, der Bügelschaft mit seinem Gelenkauge andererseits und ferner der Gelenkbolzen als separate Teile durch Spritzgießen gefertigt werden und nach dem Spritzgießen aneinander bzw. ineinander montiert werden. Bei geeigneter Wahl des verwendeten Kunststoffs ermöglicht das bekannte Vorgehen ein Gelenk mit geringen Abmessungen und geringem Gewicht. Ein Gelenk der beschriebenen Art ist zwangsläufig im Betrieb einem gewissen Verschleiß unterworfen, der sich in Brüchen des Gelenkbolzens oder der Gelenkaugen auswirken kann. Dies beschränkt die Lebensdauer eines Gelenks bestimmter Abmessungen bzw. zwingt zur Vergrößerung der belasteten Querschnitte, wenn die Lebensdauer erhöht werden soll.

Der Erfindung liegt die Aufgabe zugrunde, das gattungsgemäße Gelenk derart weiterzubilden, daß seine Verschleißfestigkeit erhöht ist, sowie ein Verfahren zur Herstellung dieses Gelenks zu schaffen.

Diese Aufgabe wird erfindungsgemäß im Hinblick auf das Gelenk gelöst durch die Merkmale im kennzeichnenden Teil von Patentanspruch 1, d h. im wesentlichen dadurch, daß der Gelenkbolzen und das zweite Element einstückig ausgebildet sind, wobei zu diesem Zweck entweder der Gelenkbolzen in die Öffnung des Gelenkauges hinein spritzgegossen worden ist, während gleichzeitig das zweite Element als Einheit mit dem Gelenkbolzen spritzgegossen wird, oder das Gelenkauge um den Gelenkbolzen herum spritzgegossen worden ist, der zuvor mit dem zweiten Element einstückig gefertigt worden ist.

Wegen der einstückigen Ausbildung des Gelenkbolzens mit dem zweiten Element ist am zweiten Element kein Gelenkauge erforderlich. Dementsprechend entfällt auch die Bruchgefahr der Gelenkaugen am zweiten Element, die beim gattungsgemäßen Gelenk gegeben ist, so daß allein schon aus diesem Grunde die Verschleißfestigkeit erhöht ist. Darüber hinaus hat sich gezeigt, daß auch - bei sonst gleichen Abmessungen - die Bruchgefahr des Gelenkbolzens verringert ist, was zu einer weiteren Erhöhung der Verschleißfestigkeit führt. Schließlich entfällt beim erfindungsgemäßen Gelenk die Notwendigkeit, den Gelenkbolzen getrennt zu fertigen und das Gelenk durch Einstecken des Gelenkbolzens zu montieren, so daß aufgrund der erfindungsgemäßen Ausbildung Herstellung und Montage des Gelenks vereinfacht sind.

In vorteilhafter Ausbildung der Erfindung kann vorgesehen sein, daß die Übergänge zwischen dem in der Öffnung des Gelenkauges angeordneten Abschnitt des Gelenkbolzens und dem zweiten Element abgerundet sind. Dies ermöglicht größere belastete Querschnitte des Gelenkbolzens im Bereich der Übergänge und verringert dort die Spannungsspitzen.

Bei dem erfindungsgemäßen Gelenk bestehen die spritzgegossenen Bauteile, d.h. der Gelenkbolzen und das zweite Element oder das zumindest eine Gelenkauge notwendigerweise aus einem spritzgießbaren Kunststoff. Die anderen Bauteile des Gelenks können aus einem anderen Werkstoff, beispiels weise aus einem metallischen Werkstoff, bestehen. Vorzugsweise bestehen jedoch alle Bauteile des Gelenks aus Kunststoff, wobei wiederum vorzugsweise auch das zumindest eine Gelenkauge und das erste Element einstückig miteinander ausgebildet sind. Dabei muß dann gewährleistet sein, daß beim Spritzgießen des Gelenkbolzens in die Öffnung des Gelenkauges bzw. beim Spritzgießen des Gelenkauges um den Gelenkbolzen herum die Werkstoffe,aus denen das Gelenkauge und der Gelenkbolzen bestehen, keine stoffliche Verbindung miteinander eingehen, damit die Beweglichkeit des Gelenks gewährleistet ist.

Vorzugsweise liegen die Glastemperaturen der für das zumindest eine Gelenkauge und den Gelenkbolzen verwendeten Kunststoffe soweit auseinander, daß bei der Verarbeitungstemperatur des spritzzugießenden Bauteils (Gelenkauge oder Gelenkbolzen) die Oberfläche des anderen Bauteils (Gelenkbolzen oder Gelenkauge) nicht angeschmolzen und nicht deformiert wird. Hierzu beträgt die Differenz der Glastemperaturen vorzugsweise zumindest 40 °C.

Die Beweglichkeit des Gelenks kann allerdings auch dadurch gewährleistet sein, daß bei der genannten Verarbeitungstemperatur die beiden Kunststoffe inkompatibel sind.

Das zumindest eine Gelenkauge kann sich sowohl am Gelenkstück als auch am Bügelschaft befinden; vorzugsweise ist es jedoch am Bügelschaft ausgebildet.

Die erhöhte Verschleißfestigkeit des erfindungsgemäßen Gelenks ermöglicht Gelenke mit verhältnismäßig kleinen Abmessungen bei großer Lebensdauer. Vorzugsweise beträgt die Höhe des Gelenks in Richtung der Gelenkachse weniger als 5 mm, insbesondere 4 mm.

Hinsichtlich des Verfahrens wird die Aufgabe erfindungsgemäß durch die Verfahrensschritte gemäß Patentanspruch 12 gelöst, d.h. im wesentlichen dadurch, daß zunächst entweder das erste Element, d.h. das mit dem zumindest einen Gelenkauge versehene Element, oder das zweite Element, d.h. das mit dem Gelenkbolzen einstückig ausgebildete Element, gefertigt wird und daß beim Spritzgießen des jeweils anderen Elementes das zunächst gefertigte Element in das Spritzgießwerkzeug eingelegt ist und darin den Formhohlraum für das noch spritzzugießende Element in den Bereichen begrenzt, in denen die beiden Elemente sowie der Gelenkbolzen und die Gelenkaugen sich am fertigen Gelenk berühren, d.h. komplementär zueinander geformt sind. Es wird somit das eine Element an das andere angespritzt, wobei jedoch durch geeignete Wahl der verwendeten Werkstoffe und/oder der Verfahrensparameter, beispielsweise der Verarbeitungstemperatur des Kunststoffs des anderen, später gefertigten Elementes dafür gesorgt wird, daß die beiden Elemente sowie die Gelenkaugen und der Gelenkbolzen keine stoffliche Verbindung miteinander eingehen und die Beweglichkeit des Gelenks gewährleistet ist.

Weitere vorteilhafte Ausgestaltungen der Erfindung ergeben sich aus den Unteransprüchen sowie der folgenden Beschreibung von Ausführungsbeispielen.

Gelenke zum Verbinden eines Bügelschaftes mit einem Gelenkstück einer Brille, bei denen das Gelenkstück, der Bügelschaft, der Gelenkbolzen und die Gelenkaugen sämtlich aus Kunststoff bestehen und bei denen der Gelenkbolzen und das zweite, d.h. mit dem Gelenkbolzen verbundene Element einstückig ausgebildet sind, sind an sich bekannt (FR-PS 954 467, FR-PS 1 126 049, US-PS 4 153 347). In diesen bekannten Fällen ist jedoch entweder der Gelenk bolzen in Richtung der Gelenkachse unterbrochen (FR-PS 954 467; US-PS 4 153 347 (Fig. 4)) oder sind die Gelenkaugen in Umfangsrichtung unterbrochen (FR-PS 1 126 049). Dies bedeutet eine erhebliche Schwächung des Gelenkbolzens bzw. der Gelenkaugen, die zu entsprechend großer Dimensionierung zwingt, um hinreichende Festigkeit und Steifigkeit zu erreichen.

Darüber hinaus wird in keinem dieser bekannten Fälle der Gelenkbolzen in die Öffnungen der Gelenkaugen gespritzt oder das jeweilige Gelenkauge um den Gelenkbolzen herum spritzgegossen.

Ausführungsbeispiele der Erfindung sind in den Zeichnungen dargestellt und werden im folgenden näher erläutert. Es zeigen:

Fig. 1 eine Draufsicht auf eine erste Ausführungsform eines erfindungsgemäßen Gelenks zusammen mit einem Gelenkstück und dem vorderen Ende eines Bügelschaftes;

Fig. 2 eine Seitenansicht des Gelenks gemäß Fig. 1, wobei ein in Fig. 1 gestrichelt und ausschnittsweise dargestelltes Brillenglas weggelassen ist;

Fig. 3 eine perspektivische, ausschnittsweise Ansicht des Gelenkstücks des Gelenks gemäß den Fig 1 und 2;

Fig. 4 eine perspektivische, ausschnittsweise Ansicht des Bügelschaftes des Gelenks gemäß den Fig. 1 und 2;

Fig. 5 eine Schnittdarstellung gemäß A-B in Fig. 1;

Fig. 6 eine Fig. 5 entsprechende Schnittdarstellung einer abgewandelten Ausführungsform des ersten Ausführungsbeispiels;

Fig. 7 eine Fig. 5 entsprechende Schnittdarstellung eines zweiten Ausführungsbeispiels des erfindungsgemäßen Gelenks;

Fig. 8 eine Fig. 3 entsprechende perspektivische, ausschnittsweise Ansicht des Gelenkstücks des zweiten Ausführungsbeispiels; und

Fig. 9 eine Fig. 4 entsprechende perspektivische, ausschnittsweise Ansicht des Bügelschaftes des zweiten Ausführungsbeispiels.

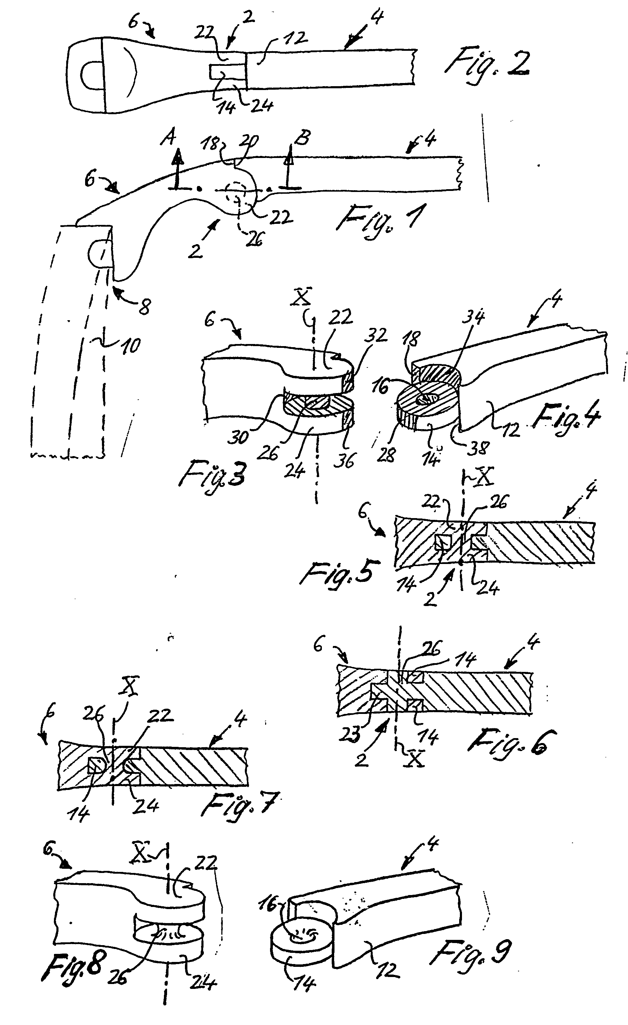

Ein in den Fig. 1 bis 5 dargestelltes Gelenk 2 für eine Brille verbindet gelenkig einen Bügelschaft 4 mit einem Gelenkstück 6. Das Gelenkstück 6 ist mit Hilfe einer Befestigungsvorrichtung 8 fest und unbeweglich mit einem Brillenglas 10 verbunden, das lediglich gestrichelt und ausschnittsweise in Fig. 1 gezeigt ist. Da es auf die Ausbildung der Befestigungsvorrichtung 8 für die vorliegende Erfindung nicht ankommt, wird die Befestigungsvorrichtung 8 hier nicht näher erläutert.

Einstückig am vorderen Ende 12 des Bügelschaftes 4 ausgebildet ist ein Gelenkauge 14 in Form eines geschlossenen, ununterbrochenen Ringes mit einer mittigen Öffnung 16. Bei Betrachtung in Richtung der Gelenkachse X befindet sich das Gelenkauge 14 ungefähr auf halber Höhe des vorderen Endes 12 des Bügelschaftes 4 und hat das Gelenkauge 14 selber ungefähr ein Drittel der Höhe des vorderen Endes 12 des Bügelschaftes 4. An diesem vorderen Ende 12 ist ferner eine Anschlagfläche 18 ausgebildet, die mit einer komplementär geformten Anschlagfläche 20 am Gelenkstück 6 dabei zusammenwirkt, zu verhindern, daß der Bügelschaft 4 relativ zum Gelenkstück 6 im Gegenuhrzeigersinn (in Fig. 1) über die in Fig. 1 gezeigte Stellung hinausgeschwenkt werden kann.

Am Gelenkstück 6 sind zwei kreisförmige Platten 22 und 24 angeformt, die den gleichen Durchmesser wie der das Gelenkauge 14 bildende Ring haben. Diese beiden Platten 12 und 14 unterscheiden sich vom Gelenkauge hinsichtlich ihrer Form lediglich dadurch, daß sie keine der Öffnung 16 entsprechende Öffnung aufweisen. Die beiden Platten 22 und 24 sind am Gelenkstück 6 unter Freilassung eines Zwischenraumes angeordnet, dessen Höhe in Richtung der Gelenkachse gleich der Höhe des Gelenkauges 14 ist. Im betriebsfertigen Zustand des Gelenks 2 liegen das Gelenkauge 14 und die beiden Platten 22 und 24 in Richtung der Gelenkachse X fluchtend übereinander.

Einstückig mit den beiden Platten 22 und 24 ausgebildet ist ein Gelenkbolzen 26, der bündig in der Öffnung 16 des Gelenkauges 14 sitzt und in Richtung der Gelenkachse X ohne Unterbrechungen ist. Der in der Öffnung 16 angeordnete Abschnitt des Gelenkbolzens 26 hat bei dem in den Fig 1 bis 5 dargestellten Ausführungsbeispiel ein kreiszylindrisches Profil.

Fig. 3 zeigt das Gelenkstück 6 mit den einstückig angeformten Platten 22 und 24 sowie dem einstückig angeformten Gelenkbolzen 26. Fig. 4 zeigt das vordere Ende des Bügelschaftes 4 mit dem angeformten Gelenkauge 14. Klargestellt sei, daß ein bestimmtes Gelenk 2 nicht in das Gelenkstück gemäß Fig. 3 und den Bügelschaft gemäß Fig. 4 zerlegt werden kann, weil der Bügelschaft 26 am Gelenkstück 6 angeformt ist und das Gelenkauge 14 als geschlossener Ring ausgebildet ist. Auch vor dem Zusammenfügen von Gelenkstück 6 und Bügelschaft 4 haben diese Elemente nicht beide die in den Fig. 3 und 4 dargestellte Ausbildung. Diese Figuren dienen lediglich dazu, die Geometrie und Ausbildung jedes Elementes für sich zu zeigen.

Wenn der Bügelschaft 4 und das Gelenkstück 6 die in den Fig. 1 und 2 gezeigte Relativstellung zueinander einnehmen, berühren sich einzelne Oberflächen des Bügelschaftes 4 und des Gelenkauges 14 einerseits sowie des Gelenkstücks 6, der Platten 22 und 24 und des Gelenkbolzens 26 andererseits. Diese Berührungsflächen sind am Bügelschaft 4 und Gelenkauge 14 durch Schraffur in den Fig. 3 und 4 gekennzeichnet. Es berühren sich die Oberseite des Gelenkauges 14 und die Unterseite der oberen Platte 22, die Unterseite des Gelenkauges 14 und die Oberseite der unteren Platte 24, die Mantelfläche des in der Öffnung 16 angeordneten Abschnitts des Gelenkbolzens 26 und die Oberfläche der Öffnung 16, die beiden Anschlagflächen 18 und 20, ein Abschnitt 28 der Mantelfläche des Gelenkauges 14 und ein Flächenabschnitt 30 am Gelenkstück 26, ein Abschnitt 32 der Mantelfläche der oberen Scheibe 22 und ein Flächenabschnitt 34 am Bügelschaft 4 sowie ein Abschnitt 36 der Mantelfläche der unteren Scheibe 24 und ein Flächenabschnitt 38 am Bügelschaft 4. Diese sich paarweise berührenden Flächen sind demzufolge komplementär zueinander geformt.

Das vorstehend beschriebene Gelenk wird beispielsweise auf folgende Weise hergestellt.

Zunächst wird der Bügelschaft 4 mit dem angeformten Gelenkauge 14 gefertigt, was beispielsweise durch Spritzgießen aus einem geeigneten Kunststoff geschehen kann. Danach wird das Gelenkstück 6 mit dem einstückig angeformten Gelenkbolzen 26 durch Spritzgießen aus einem geeigneten Kunststoff hergestellt. Zu diesem Zweck wird der bereits gefertigte Bügelschaft 4 mit dem Gelenkauge 14 derart in ein nicht dargestelltes Spritzgießwerkzeug für das Gelenkstück 6 eingesetzt, daß der Bügelschaft 4 teilweise die Begrenzung des nicht dargestellten Formhohlraums für das Gelenkstück 6 bildet. Dies heißt mit anderen Worten, daß die vorstehend erläuterten und in Fig. 4 gestrichelt angelegten Berührungsflächen den Formhohlraum für das Gelenkstück in denjenigen Bereichen begrenzen und dort die Oberfläche des Formhohlraums bilden, die die gestrichelt in Fig. 3 angelegten Berührungsflächen definieren und beim Spritzgießen formen. In den auf diese Weise definierten Formhohlraum wird dann der Kunststoff für das Gelenkstück 6 eingespritzt. Dabei wird dann nicht nur das Gelenkstück 6 geformt, sondern es werden auch die beiden Platten 22 und 24 sowie der Gelenkbolzen 26 geformt, da der Kunststoff für den Gelenkbolzen 26 in die Öffnung 16 einfließt bzw. eingespritzt wird (siehe auch Fig. 5).

Es ergibt sich somit ein Gelenk aus lediglich zwei getrennt gefertigten Bauteilen, nämlich einerseits dem Gelenkbolzen 26 und den mit diesem einstückig ausgebildeten Platten 22 und 24, die ihrerseits einstückig mit dem Gelenkstück 6 ausgebildet sind, und andererseits dem Gelenkauge 14, das einstückig mit dem Bügelschaft 4 ausgebildet ist. Die beiden Platten 22 und 24 weisen keine mittige Öffnung auf und haben allein schon daher eine höhere Festigkeit als ein herkömmliches Gelenkauge mit einer Öffnung. Ferner hat sich gezeigt, daß die einstückige Ausbildung zwischen den Platten 22 und 24 einerseits und dem Gelenkbolzen 26 andererseits zu einem höher belastbaren Gelenkbolzen 26 führt, als wenn bei sonst gleichen Abmessungen und Werkstoffen der Gelenkbolzen 26 für sich gefertigt würde und in die Platten 22 und 24 ersetzenden, herkömmlichen Gelenkaugen sitzen würde.

Bei dem vorstehend beschriebenen Ausführungsbeispiel ist am Bügelschaft 4 lediglich ein Gelenkauge 14 vorgesehen. Es versteht sich, daß statt eines Gelenkauges 14 auch zwei oder mehr Gelenkaugen am Bügelschaft 4 ausgebildet sein können und dementsprechend am Gelenkstück 6 drei oder mehr Scheiben vorgesehen sein würden.

Beim vorstehend beschriebenen Ausführungsbeispiel ist der Bügelschaft 4 mit dem Gelenkauge 14 das zunächst gefertigte Elemente und ist das Gelenkstück 6 mit dem angeformten Gelenkbolzen 26 das andere, danach gefertigte Element. Aus der vorstehenden Beschreibung dürfte klar sein, daß diese Elemente auch in umgekehrter Reihenfolge gefertigt werden können: Es kann zunächst das Gelenkstück 6 mit dem Gelenkbolzen 26 einstückig ausgebildet und gefertigt werden und in ein Spritzgießwerkzeug für den Bügelschaft 4 und das Gelenkauge 14 derart eingesetzt werden, daß es den Formhohlraum mit seinen schraffiert in Fig. 3 dargestellten Berührungsflächen teilweise begrenzt. In diesem Fall bestehen dann der Bügelschaft 4 und das Gelenkauge 14 aus dem spritzgießbaren Kunststoff, wobei der Kunststoff während des Spritzgießens um den Gelenkbolzen 26 herum gespritzt wird und dadurch das Gelenkauge 14 bildet.

Bei dem vorstehend beschriebenen Ausführungsbeispiel ist das Gelenkauge 14 am Bügelschaft 4 ausgebildet, der somit bei diesem Ausführungsbeispiel das "erste" Element im Sinne der Patentansprüche darstellt. Demzufolge ist bei dem beschriebenen Ausführungsbeispiel das Gelenkstück 6 das "zweite" Element im Sinne der Patentansprüche. Es ist jedoch ebenfalls möglich, daß das Gelenkstück 6 das erste Element mit dem Gelenkauge bzw. mehreren Gelenkaugen bildet und dementsprechend der Bügelschaft 4 das zweite Element bildet, mit dem der Gelenkbolzen einstückig ausgebildet ist. Ein Beispiel hierfür zeigt Fig. 6 als Abwandlung des erstbeschriebenen Ausführungsbeispiels. Dabei weist das Gelenkstück 6 zwei Gelenkaugen 14, nämlich ein oberes Gelenkauge und ein unteres Gelenkauge, auf, während am Bügelschaft 4 statt der Ausbildung gemäß den Fig. 1 bis 5 eine den Platten 22 und 24 ähnliche Platte 23 angeordnet ist, die einstückig mit dem Gelenkbolzen 24 ausgebildet ist. Für das Verfahren zur Herstellung dieser Abwandlung gilt das vorstehend zum ersten Ausführungsbeispiel Gesagte.

In den Fig. 7 bis 9 ist ein zweites Ausführungsbeispiel dargestellt, das im folgenden lediglich hinsichtlich seiner Unterschiede zum ersten Ausführungsbeispiel erläutert wird. Es werden für gleiche bzw. entsprechende Teile gleiche Bezugszeichen wie beim ersten Ausführungsbeispiel benutzt. Die Besonderheit des zweiten Ausführungsbeispiels im Vergleich zum ersten Ausführungsbeispiel besteht darin, daß der in der Öffnung 16 des Gelenkauges 14 angeordnete Abschnitt des Gelenkbolzens 26 im Axialschnitt, den Fig. 7 zeigt, die Form einer mittig eingeschnürten Walze hat, so daß die Übergänge zwischen dem in der Öffnung 16 angeordneten Abschnitt des Gelenkbolzens 26 und den beiden Platten 22 und 24 und somit dem Gelenkstück 6 abgerundet sind. Bei sonst gleichen Abmessungen wie beim ersten Ausführungsbeispiel ermöglicht die besondere Ausbildung gemäß den Fig. 7 bis 9, dem Gelenkbolzen 26 im Bereich der abgerundeten Übergänge eine größere Querschnittsfläche und im Bereich der stärksten Einschnürung eine kleinere Querschnittsfläche zu geben, so daß einerseits die hauptsächlich auf Scherung beanspruchte Querschnittsfläche des Gelenkbolzens vergrößert ist und andererseits die in Fig. 7 erkennbare Querschnittsfläche des Gelenkauges 14 (aufgrund der Einschnürung des Gelenkbolzens) ebenfalls vergrößert sein kann. Beide Maßnahmen erhöhen die Belastbarkeit des Gelenks und beugen der Gefahr von Brüchen vor. Dabei ist zu beachten, daß das Gelenkauge 14 und der Gelenkbolzen 26 auch im Bereich der Einschnürung des Gelenkbolzens in Berührung miteinander stehen und der im Bereich der Einschnürung vorhandene Raum für das Gelenkauge 14 genutzt ist. Dies wäre bei einem herkömmlichen Gelenk mit einem separat gefertigten, eingesteckten Gelenkbolzen nicht möglich.

Bei den vorstehend beschriebenen Ausführungsbeispielen bestehen alle Bauteile des Gelenks sowie das Gelenkstück 6 und der Bügelschaft 4 aus Kunststoff. Eines dieser beiden Elemente, nämlich das zunächst gefertigte mit dem ihm zugehörigen Gelenkauge bzw. Gelenkbolzen muß jedoch nicht aus Kunststoff bestehen, sondern kann beispielsweise auch aus einem metallischen Werkstoff bestehen.

Vorzugsweise bestehen jedoch alle Bauteile des Elementes und außerdem das Gelenkstück 6 sowie der Bügelschaft 4 aus einem Kunststoff. In diesem Fall muß dafür gesorgt sein, daß beim Spritzgießen des Gelenkbolzens in das Gelenkauge hinein bzw. des Gelenkauges um den Gelenkbolzen herum keine stoffliche Verbindung zwischen Gelenkbolzen und Gelenkauge entsteht und auch keine Verformung im Bereich der Berührungsflächen des zunächst gefertigten und des anderen Elementes erfolgt. Dies wird vorzugsweise dadurch erreicht, daß der Kunststoff des zunächst gefertigten Elementes eine höhere Glastemperatur hat als die des Kunststoffs des danach spritzgegossenen Elementes, so daß die Verarbeitungstemperatur des danach spritzgegossenen Elementes entsprechend niedriger sein kann als die Verarbeitungstemperatur des zunäcst gefertigten Elementes.

Als Werkstoff für das zunächst gefertigte Element eignet sich besonders ein Polyetherimid-Werkstoff, wie er in der DE-OS 34 29 074 beschrieben ist. Ein Beispiel für einen solchen Polyetherimid-Werkstoff ist der von der Firma General Electric unter der Bezeichnung "Ultem" vertriebene Werkstoff mit einer Glastemperatur im Bereich von 210 bis 230°C, der vorzugsweise verarbeitet wird bei einer Verarbeitungstemperatur von ca. 390°C. Ferner geeignet als Werkstoff für das zunächst gefertigte Element ist ein Polyethersulfon-Werkstoff, wie er beispielsweise von der Firma BASF unter der Bezeichnung "Ultrason E" vertrieben wird. Dieser Werkstoff hat eine Glastemperatur im Bereich von 200 bis 210°C und wird vorzugsweise bei einer Verarbeitungstemperatur von 370°C verarbeitet. Als Werkstoff für das andere, später durch Spritzgießen gefertigte Element eignen sich amorphe, aromatische Polyestercarbonate, wie sie beispielsweise von der Firma Bayer unter der Bezeichnung "Apec-KU" und "Apec-KL" vertrieben werden und in den Veröffentlichungen "Anwendungstechnische Information Nr. 460/83" sowie "Anwendungstechnische Information Nr. 538" der Firma Bayer beschrieben sind. Diese werden vorzugsweise verarbeitet bei einer Verarbeitungstemperatur von 340°C. Ferner eignet sich für das später durch Spritzgießen gefertigte Element ein Polycarbonat-Werkstoff, wie er beispielsweise von der Firma Bayer unter der Bezeichnung "Makrolon" vertrieben wird und in der Veröffentlichung "Richtwerte von Makrolon", Bestellnummer KU 46100a, der Firma Bayer erläutert ist. Dieser Polycar bonat-Werkstoff hat eine Glastemperatur von ungefähr 140 bis 150°C und wird vorzugsweise bei einer Verarbeitungstemperatur von 300°C verarbeitet, Die Paarungen "Ultem"/"Apec-KL", "Ultem"/"Makrolon" und "Ultrason"/"Makrolon" haben bei Versuchen einwandfreie Ergebnisse und zuverlässig funktionierende Gelenke ergeben. Bei diesen Versuchen kam "Ultem 1010" zur Anwendung, das bei einer Formentemperatur von 150°C gespritzt wurde. Der Polyestercarbonat-Werkstoff war "APE-KL-1-9310", der bei einer Formentemperatur von 100°C gespritzt wurde. Der Polycarbonat-Werkstoff war dabei "Makrolon 2805", der bei einer Formentemperatur von 120°C gespritzt wurde, und der Polyethersulfon-Werkstoff war dabei "Ultrason E 2000", der bei einer Formentemperatur von 130°C gespritzt wurde. Die Verarbeitungstemperaturen waren jeweils die vorstehend genannten bevorzugten Verarbeitungstemperaturen. Die genannten Werkstoffe sind für Brillenbauteile besonders geeignet.

Vorzugsweise kommt der Polyetherimid-Werkstoff "Ultem" bei dem Bügelschaft 4 zur Anwendung.

Bei einem Gelenk zum Verbinden eines Bügelschaftes mit einem Gelenkstück einer Brille befindet sich lediglich an einem dieser Elemente (Gelenkstück oder Bügelschaft) zumindest ein Gelenkauge. Der durch dieses Auge verlaufende Gelenkzapfen ist mit dem anderen Element (Bügelschaft oder Gelenkstück) einstückig ausgebildet. Zu diesem Zweck ist entweder der Gelenkbolzen aus Kunststoff bestehend in die Öffnung des Gelenkauges spritzgegossen oder das Gelenkauge aus Kunststoff bestehend um den Gelenkbolzen herum spritzgegossen. Dabei wird vorzugsweise in der Weise vorgegangen, daß zunächst eines der beiden Elemente mit dem zugehörigen Gelenkauge oder Gelenkbolzen gefertigt wird und dieses zunächst gefertigte Element einen Teil der Oberfläche des Hohlraums des Spritzgießwerkzeugs für das andere Element bildet, so daß das andere Element unmittelbar an das zunächst gefertigte Element angegossen wird Die hohe Belastbarkeit dieses Gelenks beugt Verschleißbrüchen vor, wodurch einerseits die Lebensdauer erhöht ist und andererseits das Gelenk kleine Abmessungen haben kann.

## Ansprüche

1. Gelenk zum Verbinden eines Bügelschaftes mit einem Gelenkstück einer Brille, mit zumindest einem Gelenkauge in Form eines ununterbrochenen Ringes, das an einem ersten der beiden verbundenen Elemente (Gelenkstück oder Bügelschaft) befestigt ist, und mit einem in Richtung der Gelenkachse ununterbrochenen, rotationssymmetrischen Gelenkbolzen, der durch die Öffnung des Gelenkauges verläuft und am zweiten der beiden verbundenen Elemente (Bügelschaft oder Gelenkstück) befestigt ist, wobei zumindest der Gelenkbolzen oder das Gelenkauge aus einem spritzgießbaren Kunststoff besteht, dadurch gekennzeichnet, daß der Gelenkbolzen (26) und das zweite Element (Bügelschaft (4) oder Gelenkstück (6)) einstückig ausgebildet sind und daß entweder der Gelenkbolzen (26) aus dem Kunststoff bestehend in die Öffnung (16) des Gelenkauges (14) spritzgegossen ist oder das Gelenkauge (14) aus dem Kunststoff bestehend um den Gelenkbolzen (26) herum spritzgegossen ist.

2. Gelenk nach Anspruch 1, dadurch gekennzeichnet, daß die Öffnung (16) des Gelenkauges (14) und der darin angeordnete Abschnitt des Gelenkbolzens (26) ein kreiszylindrisches Profil haben.

3. Gelenk nach Anspruch 1, dadurch gekennzeichnet, daß die Übergänge zwischen dem in der Öffnung (16) des Gelenkauges (14) angeordneten Abschnitt des Gelenkbolzens (26) und dem zweiten Element abgerundet sind.

4. Gelenk nach Anspruch 3, dadurch gekennzeichnet, daß der in der Öffnung (16) des Gelenkauges (14) angeordnete Abschnitt des Gelenkbolzens (26) im Axialschnitt die Form einer mittig eingeschnürten Walze hat.

5. Gelenk nach einem der Ansprüche 1 bis 4, dadurch gekennzeichnet, daß das zumindest eine Gelenkauge (14) und das erste der beiden Elemente einstückig miteinander ausgebildet sind.

6. Gelenk nach Anspruch 5, dadurch gekennzeichnet, daß das erste Element mit dem Gelenkauge (14) einerseits und das zweite Element mit dem Gelenkbolzen (26) andererseits aus verschiedenen Kunststoffen bestehen, die bei dem Spritzgießen des Gelenkauges (14) bzw. des Gelenkbolzens (26) keine stoffliche Verbindung eingehen.

7. Gelenk nach Anspruch 6, dadurch gekennzeichnet, daß die beiden Kunststoffe bei der Verarbeitungstemperatur des Kunststoffs des spritzgegossenen Gelenkauges (14) bzw. Gelenkbolzens (26) inkompatibel sind.

8. Gelenk nach Anspruch 6 oder 7, dadurch gekennzeichnet, daß der Kunststoff des spritzgegossenen Gelenkauges (14) bzw. Gelenkbolzens (26) eine Glastemperatur hat, die um zumindest 40 °C niedriger ist als die Glastemperatur des anderen Kunststoffs.

9. Gelenk nach einem der Ansprüche 1 bis 8 , dadurch gekennzeichnet, daß sich das zumindest eine Gelenkauge (14) am Bügelschaft (4) befindet.

10. Gelenk nach einem der Ansprüche 1 bis 8, dadurch gekennzeichnet, daß sich das zumindest eine Gelenkauge (14) am Gelenkstück (6) befindet.

11. Gelenk nach einem der Ansprüche 1 bis 10, dadurch gekennzeichnet, daß die Höhe des Gelenks in Richtung der Gelenkachse (X) weniger als 8 mm, vorzugsweise weniger als 5 mm, beträgt.

12. Verfahren zur Herstellung eines Gelenks zum Verbinden eines Bügelschaftes mit einem Gelenkstück einer Brille nach einem der Ansprüche 1 bis 11, wobei das Gelenk zumindest ein Gelenkauge in Form eines ununterbrochenen Ringes, das an einem ersten der beiden verbundenen Elemente (Gelenkstück oder Bügelschaft) befestigt ist, und einen in Richtung der Gelenkachse ununterbrochenen, rotationssymmetrischen Gelenkbolzen aufweist, der durch die Öffnung des Gelenkauges verläuft und am zweiten der beiden verbundenen Elemente (Bügelschaft oder Gelenkstück) befestigt ist, wobei zumindest das erste Element mit dem Gelenkauge oder das zweite Element mit dem Gelenkbolzen aus einem Kunststoff in einem Spritzgießwerkzeug geformt wird und wobei zunächst entweder das erste Element mit dem Gelenkauge oder das zweite Element mit dem Gelenkbolzen gefertigt wird, dadurch gekennzeichnet, daß das zunächst gefertigte Element derart in das Spritzgießwerkzeug eingelegt wird, daß es teilweise die Begrenzung des Formhohlraums für das andere Element bildet, und daß danach der Kunststoff für das andere Element eingespritzt wird.

13. Verfahren nach Anspruch 12, dadurch gekennzeichnet, daß das erste Element mit dem Gelenkauge und das zweite Element mit dem Gelenkzapfen aus verschiedenen Kunststoffen gefertigt werden und daß die Verarbeitungstemperatur des Kunststoffs für das zunächst gefertigte Element höher ist als die Verarbeitungstemperatur des Kunststoffs des anderen Elementes.

14. Verfahren nach Anspruch 13, dadurch gekennzeichnet, daß die Verarbeitungstemperatur des Kunststoffs für das zunächst gefertigte Element um zumindest 40 °C höher ist als die Verarbeitungstemperatur des Kunststoffs des anderen Elementes.

Fig. 2

Fig. 1

Fig. 3

Fig. 4

Fig. 5

Fig. 6

Fig. 7

Fig. 8

Fig. 9